# EUROPÄISCHE PATENTSCHRIFT

(11) **EP 1 170 108 B1**
(45) Veröffentlichungstag und Bekanntmachung des Hinweises auf die Patenterteilung: **04.08.2004**
(21) Anmeldenummer: 01115544.7
(22) Anmeldetag: 28.06.2001
(51) Int. Cl.: B29B 7/74, B29B 7/26, B29B 7/24

(54) **Mehrstufige, diskontinuierlich arbeitende Mischvorrichtung zur Herstellung insbesondere von Kautschukmischungen**
Multi-stage non-continuous mixer for rubber mixtures
Mélangeur multiétagé discontinu pour mélanges de caoutchouc

(30) Priorität: 07.07.2000 DE 10033087
(43) Veröffentlichungstag der Anmeldung: 09.01.2002
(73) Patentinhaber: ThyssenKrupp Elastomertechnik GmbH, 21079 Hamburg (DE)
(72) Erfinder: Limper, Andreas, 57258 Freudenberg (DE)
(74) Vertreter: John, Ernst, Dipl.-Ing.

(56) Entgegenhaltungen:
- GB-A- 615 202
- US-A- 4 910 237
- PATENT ABSTRACTS OF JAPAN vol. 008, no. 120 (M-300), 6. Juni 1984 (1984-06-06) -& JP 59 024646 A (TOYODA GOSEI KK), 8. Februar 1984 (1984-02-08)

## Beschreibung

Die Erfindung betrifft eine mehrstufige, diskontinuierlich arbeitende Mischvorrichtung zur Herstellung insbesondere von Kautschukmischungen, mit einem ersten Kneter zur Durchführung einer ersten Mischstufe, mit einem unterhalb des ersten Kneters angeordneten zweiten Kneter zur Durchführung einer weiteren Mischstufe und mit zumindest einem dem zweiten Kneter nachgeschalteten, der Wefterbehandlung des Mischguts dienenden Nachfolgeaggregat, insbesondere Walzwerk oder Extruder, wobei beide Kneter eine Auslaßklappe für die Überführung des Mischguts aufweisen und wobei der zweite Kneter relativ zum ersten Kneter beweglich ausgebildet ist.

Kautschukmischungen und vergleichbare, ähnliche Mischungen werden in der Regel diskontinuierlich dadurch herstellt, daß die zu mischenden Materialien der Mischkammer eines Kneters zugeführt werden. Die in der Mischkammer angeordneten Rotoren unterwerfen das Mischgut hohen Scher- und Dehndeformationen, wodurch Füllstoffagglomerate wirksam dispergiert, d. h. zerkleinert werden.
Die eingebrachte mechanische Energie hat zwangsläufig eine Erhöhung der Temperatur des Mischgutes zur Folge. Falls der Kneter zur Sicherstellung der gewünschten Produktivität mit hohen Drehzahlen betrieben wird, stellen sich in Abhängigkeit davon erhöhte Temperaturen ein, welche die Zugabe thermisch sensibler Zusatzstoffe (beispielsweise von Vernetzungs- und/oder Treibmitteln) unmöglich machen. Demzufolge werden Kautschukmischungen und diesen ähnliche Mischungen in vielen Fällen mittels eines mehrstufigen Mischverfahrens hergestellt, d. h. an einen Grundmischvorgang zur Einarbeitung von Füllstoffen und thermisch nicht sensiblen Zusatzstoffen in das Polymer (bei relativ hohen Temperaturen von 150 - 200 °C) schließt sich beispielsweise zumindest ein weiterer Mischvorgang an; in diesem werden die bereits erwähnten thermisch sensiblen Zusatzstoffe der Grundmischung bei relativ niedrigen Temperaturen (< 120 °C) zugesetzt.

Der zumindest eine weitere Mischvorgang kann entweder im Rahmen eines erneuten Durchgangs durch den ersten Kneter oder in einem zweiten Kneter und zumindest einem diesen nachgeschalteten Nachfolgeaggregat durchgeführt werden. Die sich an den ersten Kneter anschließenden Vorrichtungen (zweiter Kneter und zumindest ein Nachfolgeaggregat) sind jeweils in der Lage, die in ihren Bereich überführte Mischung wirkungsvoll abzukühlen und weitere Zusatzstoffe einzumischen.

In vielen Fällen hat es sich als vorteilhaft erwiesen, den zweiten Kneter als Tandemkneter auszubilden, der - im Gegensatz zu üblichen Stempelknetern - über keinen Beschickungsstempel verfügt und in dem beispielsweise die Verfahrensschritte des "Fertigmischens" bzw. der "Nachhomogenisierung, -dispergierung" mit einem hohen Automationsgrad und mit relativ hoher Energieeinbringung ablaufen können.

Aus der Druckschrift DE 3702833 C 2 ist eine Mischvorrichtung der eingangs erwähnten Gattung bekannt, die als ersten Kneter für die Herstellung der Grundmischung einen Stempelkneter und als zweiten Kneter für die Herstellung der Fertigmischung einen stempellosen Tandemkneter aufweist. Letzterer ist insofern relativ zum ersten Kneter beweglich ausgebildet, als er - lediglich zur Erleichterung der Entleerung in ein nachgeschaltetes Nachfolgeaggregat in Form eines Schneckenmischwerks - an einem Scharniergelenk um eine ortsfeste Drehachse kippbar aufgestellt ist.
Mit Rücksicht darauf, daß zwischen den einander nachgeschalteten Aggregaten für das Öffnen der jeweils zugehörigen Auslaßklappe ein entsprechender Höhenabstand vorhanden sein muß, weist die bekannte Mischvorrichtung insgesamt einen beachtlichen Platzbedarf auf.

Der Erfindung liegt daher die Aufgabe zugrunde, eine Mischvorrichtung zu entwickeln, welche den zuvor erwähnten Nachteil vermeidet und im übrigen eine verbesserte Wirtschaftlichkeit aufweist.

Diese Aufgabe wird durch eine Mischvorrichtung mit den Merkmalen des Anspruchs 1 gelöst.

Der Grundgedanke der Erfindung besteht dabei darin, den zweiten Kneter bezüglich des ersten Kneters insgesamt als Einheit zwischen zwei Endstellungen höhenverstellbar und weiterhin derart auszubilden, daß er - der zweite Kneter - während des in ihm ablaufenden Mischvorgangs aus seiner ersten in seine zweite Endstellung überführt wird.
Abweichend vom bekannten Stand der Technik ist der zweite Kneter also nicht lediglich um eine ortsfeste Drehachse kippbar, sondern kann seine Höhenlage bezüglich des vorgeschalteten ersten Kneters und des nachgeschalteten Nachfolgeaggregats insgesamt derart verändern, daß entweder seine eigene Auslaßklappe oder die Auslaßklappe des ersten Kneters ihre jeweilige Öffnungsstellung einnehmen kann. Die Höhenverstellung kann dabei durch eine beliebige Bewegung des zweiten Kneters bewirkt werden, insbesondere auch durch eine Bewegung, die sich aus zumindest einem geradlinigen Bewegungsvorgang und einem Schwenkbewegungsvorgang zusammensetzt.
Im Grundsatz bildet die erste Endstellung des zweiten Kneters gleichzeitig seine untere Endstellung, während die zweite Endstellung der oberen Endstellung des zweiten Kneters entspricht.
Die in Rede stehende Ausgestaltung hat zur Folge, daß sich der Raumbedarf der Mischvorrichtung (insbesondere hinsichtlich ihrer Höhenabmessung) erheblich reduzieren läßt: der Höhenabstand zwischen dem ersten Kneter und dem Nachfolgeaggregat muß lediglich so bemessen sein, daß sich die Auslaßklappe des ersten Kneters bzw. die Auslaßklappe des zweiten Kneters in die Öffnungsstellung überführen läßt, wobei letzterer entweder seine erste oder seine zweite Endstellung einnimmt.
Der Einsatz eines entsprechend höhenverstellbaren zweiten Kneters gestattet es dementsprechend auch, gegebenenfalls einen geeigneten zweiten Kneter nachträglich in eine vorhandene Mischvorrichtung einzubauen.
Darüber hinaus läßt sich der Verfahrensablauf dadurch vorteilhaft beeinflussen, daß der zweite Kneter bereits während des in ihm ablaufenden Mischvorgangs aus der ersten in die zweite Endstellung überführt wird.

Bei einer Weiterbildung des Erfindungsgegenstands ist der zweite Kneter derart höhenverstellbar, daß er zumindest in seinen beiden Endstellungen eine parallel zu sich selbst ausgerichtete Lage einnimmt (Anspruch 2). Dies hat zur Folge, daß der zweite Kneter - falls er beispielsweise in seiner zweiten Endstellung als Einheit parallel zum ersten Kneter angeordnet ist - zumindest mit der Überführung in seine erste Endstellung ebenfalls eine Lage parallel zum ersten Kneter einnimmt.

Im einfachsten Fall weist der zweite Kneter einen Antrieb auf, der eine rein translatorische Höhenverstellung bewirkt (Anspruch 3).
Zu diesem Zweck kann der zweite Kneter insbesondere über Linearantriebe - wie Zylinderaggregate, Spindelgetriebe, Zahnstangengetriebe - höhenverstellbar sein mit der Folge, daß er sich parallel zu sich selbst ausgerichtet geradlinig zwischen seiner unteren und oberen Endstellung auf- und abwärts bewegt.
Alternativ können im Rahmen der Erfindung in diesem Zusammenhang auch Kurbel- oder Exzentergetriebe zur Anwendung kommen, sofern sich der zweite Kneter im übrigen an Führungselementen abstützt, die lediglich eine geradlinige Auf- und Abwärtsbewegung zulassen.

Stattdessen kann der zweite Kneter einen Antrieb aufweisen, unter dessen Einwirkung er während seiner Höhenverstellung, zumindest zeitweilig, auch eine Querbewegung ausführt (Anspruch 4).
Zu diesem Zweck kann der zweite Kneter insbesondere gelenkig mit Kniehebeln verbunden sein, die ihrerseits um ortsfeste Achsen schwenkbar und mittels Linearantrieben (wie Zylinderaggregate) verstellbar sind.
Als Antriebe, die während der Höhenverstellung des zweiten Kneters auch eine Querbewegung zur Folge haben, können weiterhin Exzentergetriebe zum Einsatz kommen, an denen sich der zweite Kneter über eine Gelenkverbindung abstützt.

Die Erfindung kann dadurch weitergehend ausgestaltet sein, daß der zweite Kneter ein Zuführrohr für Zusatzstoffe aufweist, dessen relativ zum zweiten Kneter bewegliche Austrittsöffnung in den Bereich von dessen Beschickungsöffnung überführt werden kann (Anspruch 5).

Vorzugsweise ist zumindest der zweite Kneter als stempelloser Kneter ausgebildet (Anspruch 6).

Eine vorteilhafte Weiterbildung des Erfindungsgegenstands ist dadurch gekennzeichnet, daß der zweite Kneter spätestens nach Beendigung des Mischvorgangs im ersten Kneter seine erste Endstellung einnimmt, in welcher die Auslaßklappe des ersten Kneters geöffnet wird;
daß nach Schließen der Auslaßklappe des ersten Kneters der zweite Kneter während des in ihm ablaufenden Mischvorgangs in seine zweite Endstellung bewegt wird, und
daß nach Beendigung des Mischvorgangs im zweiten Kneter dessen Auslaßklappe geöffnet wird, bevor dieser nach Austritt des Mischguts und spätestens nach Schließen seiner Auslaßklappe erneut in seine erste Endstellung überführt wird (Anspruch 7).
Die zuvor erwähnte Ausführungsform (nach Anspruch 7) kann weiterhin in der Weise ausgebildet sein, daß der zweite Kneter zeitlich parallel zur Schließbewegung seiner Verschlußklappe in seine erste Endstellung überführt wird (Anspruch 8).

Die Erfindung wird nachfolgend anhand in der Zeichnung stark schematisiert dargestellter Ausführungsbeispiele im einzelnen erläutert.
Es zeigen:
- Fig. 1a: eine Mischvorrichtung mit einem ersten Kneter, einem zweiten Kneter und einem diesem nachgeschaltetem Nachfolgeaggregat in Form eines Schneckenmischwerks, wobei der zweite Kneter unterhalb des ersten Kneters seine erste Endstellung einnimmt;
- Fig. 1b: eine Mischvorrichtung entsprechend Fig. 1a, wobei der zweite Kneter unterhalb des ersten Kneters seine zweite Endstellung einnimmt;
- Fig. 2: ein Ausführungsbeispiel für die Höhenverstellung des zweiten Kneters, der unter Einwirkung von Spindelgetrieben lediglich eine geradlinige Auf- und Abwärtsbewegung ausführen kann;
und
- Fig. 3: ein Ausführungsbeispiel für die Höhenverstellung des zweiten Kneters, der unter Einwirkung motorisch angetriebener Kniehebel während seiner Auf- und Abwärtsbewegung auch eine Querbewegung ausführt.

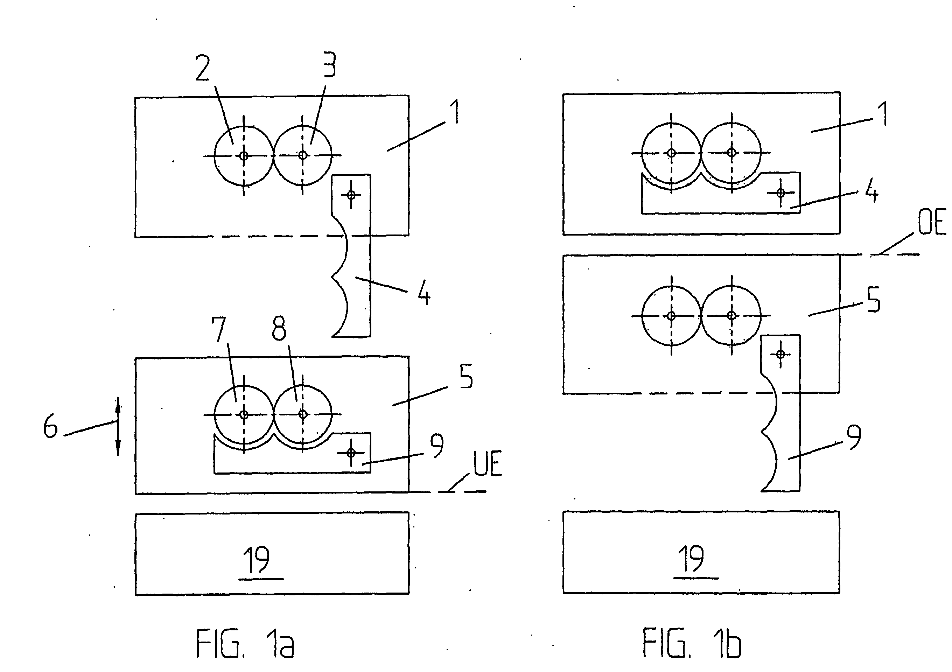

Die (lediglich stark schematisiert dargestellte) Mischvorrichtung weist einen ersten Kneter 1 auf, dessen in einer Mischkammer befindliche Rotoren 2 und 3 in an sich bekannter Weise einen Grundmischvorgang bewirken; während dieses Grundmischvorgangs ist die weiter nicht dargestellte Mischkammer mittels einer schwenkbar gehaltenen Auslaßklappe 4 - wie aus Fig. 1b ersichtlich - nach unten hin verschlossen.

Unterhalb des ersten Kneters 1 ist ein zweiter Kneter 5 angeordnet, der bezüglich des ersten Kneters 1 insgesamt als Einheit (angedeutet durch einen Doppelpfeil 6) höhenverstellbar ist.
Innerhalb einer nicht weiter dargestellten Mischkammer weist der zweite Kneter 5 zur Herstellung einer Fertigmischung Rotoren 7 und 8 auf. Die Mischkammer kann - wie in Fig. 1a dargestellt - mittels einer schwenkbaren Auslaßklappe 9 nach unten hin abgeschlossen werden.
An den zweiten Kneter 5, der als stempelloser Tandemkneter ausgebildet ist, schließt sich - unterhalb des zweiten Kneters liegend - ein Nachfolgeaggregat 19 in Form eines Schneckenmischwerks an.

Der zweite Kneter 5 ist derart höhenverstellbar ausgebildet, daß er in seiner ersten Endstellung UE (vgl. Figur 1 a)) und in seiner zweiten Endstellung OE (vgl. Fig. 1 b) eine parallel zu sich selbst ausgerichtete Lage einnimmt.

Der Verstellweg des zweiten Kneters zwischen seinen beiden Endstellungen UE bzw. OE muß lediglich so groß bemessen sein, daß bei geschlossener Auslaßklappe 9 die Auslaßklappe 4 des ersten Kneters 1 bzw. bei geschlossener Auslaßklappe 4 die Auslaßklappe 9 zur Überführung des Mischguts in das nachfolgende Aggregat geöffnet werden kann.

Die Figuren 1a und 1b lassen in diesem Zusammenhang weiterhin erkennen, daß der zweite Kneter 5 in seiner ersten Endstellung mit geringem Abstand oberhalb des Nachfolgeaggregats 19 und in seiner zweiten Endstellung OE mit geringem Abstand unterhalb des ersten Kneters 1 liegt.
Der zweite Kneter 5 ist im übrigen derart ausgebildet, daß er bereits während des in ihm ablaufenden Mischvorgangs aus seiner ersten Endstellung UE in Richtung auf den ersten Kneter 1 aufwärts bewegt werden kann; dies setzt voraus, daß die Auslaßklappe 4 entweder vorher geschlossen worden ist oder zeitlich parallel mit der Aufwärtsbewegung des zweiten Kneters 5 in ihre Schließstellung überführt wird.

Die Mischvorrichtung ist vorteilhaft zusätzlich mit einem nicht dargestellten Zuführrohr für Zusatzstoffe ausgestattet, dessen relativ zum zweiten Kneter 5 bewegliche Austrittsöffnung in den Bereich von dessen Beschickungsöffnung überführt werden kann.

Vorzugsweise ist die Mischvorrichtung derart ausgebildet, daß sie folgende Arbeitsschritte ausführt:
Spätestens nach Beendigung des Mischvorgangs im ersten Kneter 1 nimmt der zweite Kneter 5 seine erste Endstellung UE ein, in welcher die Auslaßklappe 4 des ersten Kneters geöffnet wird. Nach Schließen der Auslaßklappe 4 wird der zweite Kneter 5 während des in ihm ablaufenden Mischvorgangs in seine zweite Endstellung OE bewegt. Nach Beendigung des Mischvorgangs im zweiten Kneter 5 wird dessen Auslaßklappe 9 geöffnet, bevor dieser nach Austritt des Mischguts und spätestens nach Schließen seiner Auslaßklappe 9 erneut in seine erste Endstellung UE überführt wird.

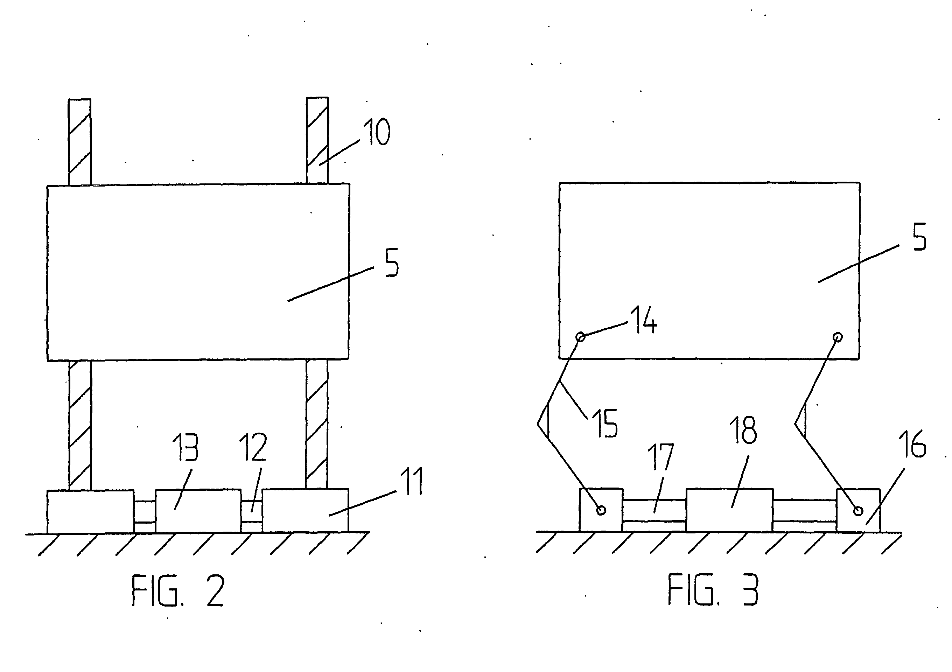

Wie in Fig. 2 und 3 dargestellt, kann der zweite Kneter 5 einen Antrieb aufweisen, der entweder eine rein translatorische Höhenverstellung bewirkt oder unter dessen Einwirkung er während seiner Höhenverstellung auch eine Querbewegung ausführt.

Bei der Ausführungsform gemäß Fig. 2 ist der zweite Kneter 5 über eine Spindelgetriebe-Anordnung geradlinig auf- und abwärts bewegbar.

Die Spindelgetriebe-Anordnung besteht dabei aus mehreren lotrechten Spindeln 10, die unter Zwischenschaltung von Getriebeblöcken 11 mit der Welle 12 eines Verstellmotors 13 gekoppelt sind. Die Spindeln 10 greifen dabei in nicht weiter dargestellte Gewindeblöcke ein, welche ihrerseits fest mit dem zweiten Kneter 5 verbunden sind.
Durch Einschalten des Verstellmotors 13 in der einen oder anderen Drehrichtung kann der zweite Kneter insgesamt als Einheit entsprechend bewegt werden.

Bei der Ausführungsform gemäß Fig. 3 stützt sich der zweite Kneter 5 über Gelenkverbindungen 14 an in sich starren Kniehebeln 15 ab, die ihrerseits schwenkbar mit Getriebeblöcken 16 in Verbindung stehen. Diese sind mit der Welle 17 eines Verstellmotors 18 gekoppelt.

Unter Einwirkung des Verstellmotors 18 führen die Kniehebel 15 bezüglich ihrer Getriebeblöcke 16 eine Schwenkbewegung im Uhrzeigersinn bzw. Gegenuhrzeigersinn aus mit der Folge, daß der zweite Kneter 5 bei gleichzeitiger Querbewegung seine Höhenlage verändert.

Die erfindungsgemäße Lehre ist nicht auf die anhand der Figuren 2 und 3 beschriebenen Ausführungsformen der Höhenverstellung beschränkt; diese kann auch unter Einwirkung andersartiger Antriebsmittel herbeigeführt werden, wie Zahnstangengetriebe, Zylinderaggregate, Exzentergetriebe und dergleichen.
Die Antriebsmittel können dabei auch derart ausgestaltet sein, daß der zweite Kneter im Laufe seiner Höhenverstellung als Einheit eine aus unterschiedlichen Bewegungsvorgängen zusammengesetzte Bewegung ausführt, beispielsweise eine teilweise geradlinige Bewegung und eine Schwenkbewegung.
Für die Verwirklichung der Erfindung ist dabei von ausschlaggebender Bedeutung, daß sich der zweite Kneter im Laufe seiner Höhenverstellung zwischen zwei Endstellungen bewegen läßt, in denen entweder die Auslaßklappe des ersten Kneters oder die Auslaßklappe des zweiten Kneters in ihre jeweilige Öffnungsstellung überführt werden kann. Abweichend von dem anhand der Zeichnung erläuterten Anwendungsfall (mit Erzeugung einer Grundmischung im ersten Kneter und Erzeugung einer Fertigmischung im zweiten Kneter) kann die Mischvorrichtung selbstverständlich auch in der Weise betrieben werden, daß in den beiden Knetem jeweils nur Mischstufen durchgeführt werden.

Der mit der Erfindung erzielte Vorteil ist insbesondere darin zu sehen, daß sich mit einfachen Mitteln eine platzsparende und in wirtschaftlicher Hinsicht verbesserte Mischvorrichtung herstellen läßt.

## Patentansprüche

1. Mehrstufige, diskontinuierliche arbeitende Mischvorrichtung zur Herstellung insbesondere von Kautschukmischungen, mit einem ersten Kneter (1) zur Durchführung einer ersten Mischstufe, mit einem unterhalb des ersten Kneters (1) angeordneten zweiten Kneter (5) zur Durchführung einer weiteren Mischstufe und mit zumindest einem dem zweiten Kneter (5) nachgeschalteten, der Weiterbehandlung des Mischguts dienenden Nachfolgeaggregat (19), insbesondere Walzwerk oder Extruder, wobei beide Kneter (1, 5) eine Auslaßklappe (4 bzw. 9) für die Überführung des Mischguts aufweisen und wobei der zweite Kneter (5) relativ zum ersten Kneter (1) beweglich ausgebildet ist,
**dadurch gekennzeichnet, daß** der zweite Kneter (5) bezüglich des ersten Kneters (1) insgesamt als Einheit derart zwischen zwei Endstellungen höhenverstellbar ist, daß einerseits in einer ersten Endstellung (UE) des zweiten Kneters (5) die Auslaßklappe (4) des ersten Kneters (1) und andererseits in einer zweiten Endstellung (OE) des zweiten Kneters (5) dessen Auslaßklappe (9) ihre jeweilige Öffnungsstellung einnehmen kann, und daß der zweite Kneter (5) während des in ihm ablaufenden Mischvorgangs aus seiner ersten Endstellung (UE) in seine zweite Endstellung (OE) überführt wird.

2. Vorrichtung nach Anspruch 1, **dadurch gekennzeichnet, daß** der zweite Kneter (5) derart höhenverstellbar ist, daß er zumindest in seinen beiden Endstellungen (UE bzw. OE) eine parallel zu sich selbst ausgerichtete Lage einnimmt.

3. Vorrichtung nach Anspruch 1 oder 2, **dadurch gekennzeichnet, daß** der zweite Kneter (5) einen Antrieb (10 bis 13) aufweist, der eine rein translatorische Höhenverstellung bewirkt.

4. Vorrichtung nach Anspruch 1 oder 2, **dadurch gekennzeichnet, daß** der zweite Kneter (5) einen Antrieb (14 bis 18) aufweist, unter dessen Einwirkung er während seiner Höhenverstellung, zumindest zeitweilig, auch eine Querbewegung ausführt.

5. Vorrichtung nach einem der vorhergehenden Ansprüche, **dadurch gekennzeichnet, daß** der zweite Kneter (5) ein Zuführrohr für Zusatzstoffe aufweist, dessen relativ zum zweiten Kneter bewegliche Austrittsöffnung in den Bereich von dessen Beschickungsöffnung überführt werden kann.

6. Vorrichtung nach zumindest einem der vorhergehenden Ansprüche, **dadurch gekennzeichnet, daß** zumindest der zweite Kneter (5) als stempelloser Kneter ausgebildet ist.

7. Vorrichtung nach zumindest einem der vorhergehenden Ansprüche, **dadurch gekennzeichnet, daß** spätestens nach Beendigung des Mischvorgangs im ersten Kneter (1) der zweite Kneter (5) seine erste Endstellung (UE) einnimmt, in welcher die Auslaßklappe (4) des ersten Kneters (1) geöffnet wird;
daß nach Schließen der Auslaßklappe (4) des ersten Kneters (1) der zweite Kneter (5) während des in ihm ablaufenden Mischvorgangs in seine zweite Endstellung (OE) bewegt wird;
daß nach Beendigung des Mischvorgangs im zweiten Kneter (5) dessen Auslaßklappe (9) geöffnet wird, bevor dieser nach Austritt des Mischguts und spätestens nach Schließen seiner Auslaßklappe (9) erneut in seine erste Endstellung (UE) überführt wird.

8. Vorrichtung nach Anspruch 7, **dadurch gekennzeichnet, daß** der zweite Kneter (5) zeitlich parallel zur Schließbewegung seiner Verschlußklappe (9) in seine erste Endstellung (UE) überführt wird.

## Claims

1. Multistage, discontinuously operating mixing device for the production in particular of rubber mixture, with a first kneader (1) to perform a first mixing stage, with a second kneader (5) disposed below the first kneader (1) to perform a further mixing stage, and with at least one aftertreatment aggregate (19), in particular a rolling mill or extruder, connected downstream of the second kneader (5) and serving to further treat the mixing material, wherein both kneaders (1, 5) have a discharge valve (4 or 9) for transfer of the mixing material, and wherein the second kneader (5) is configured to be movable relative to the first kneader (1), **characterised in that** the second kneader (5) is vertically adjustable with respect to the first kneader (1) overall as a unit between two end positions such that, on the one hand, in a first end position (UE) of the second kneader (5) the discharge valve (4) of the first kneader (1) can assume its open position and, on the other hand, in a second end position (OE) of the second kneader (5) its discharge valve (9) can assume its respective open position, and that during the mixing process proceeding in it, the second kneader (5) is moved out of its first end position (UE) into its second end position (OE).

2. Device according to Claim 1, **characterised in that** the second kneader (5) is vertically adjustable in such a manner that, at least in its two end positions (UE or OE), it assumes a position oriented parallel to itself.

3. Device according to Claim 1 or 2, **characterised in that** the second kneader (5) has a drive (10 to 13), which effects a purely translational vertical adjustment.

4. Device according to Claim 1 or 2, **characterised in that** the second kneader (5) has a drive (14 to 18), under the action of which, at least intermittently, it also executes a transverse movement during its vertical adjustment.

5. Device according to one of the preceding claims, **characterised in that** the second kneader (5) has a feed pipe for additives with an outlet movable relative to the second kneader, which can be moved into the region of its charging opening.

6. Device according to at least one of the preceding claims, **characterised in that** at least the second kneader (5) is configured as a kneader without a plunger.

7. Device according to at least one of the preceding claims, **characterised in that** at the latest after the mixing process in the first kneader (1) has finished, the second kneader (5) assumes its first end position (UE), in which the discharge valve (4) of the first kneader (1) is opened;
that after the discharge valve (4) of the first kneader (1) has closed, the second kneader (5) is moved into its second end position (OE) during the mixing process proceeding in it;
that after the mixing process in the second kneader (5) has finished, its discharge valve (9) is opened before this is once again moved into its first end position (UE) after discharge of the mixing material and at the latest after its discharge valve (9) has closed.

8. Device according to Claim 7, **characterised in that** the second kneader (5) is moved into its first end position (UE) at a parallel point in time to the closing movement of its closing valve (9).

## Revendications

1. Dispositif mélangeur multi-étagé et travaillant de façon discontinue pour la fabrication en particulier de mélanges de caoutchouc, comprenant un premier malaxeur (1) pour la mise en oeuvre d'un premier étage de mélange, un second malaxeur (5) disposé au-dessous du premier malaxeur (1) pour la mise en oeuvre d'un autre étage de mélange et au moins un groupe complémentaire (19) placé en aval du second malaxeur (5) et servant au traitement ultérieur du produit mélangé, en particulier malaxeur ou extrudeuse, les deux malaxeurs (1, 5) présentant un clapet de sortie (4 ou 9) pour le transfert du produit mélangé et le second malaxeur (5) étant conçu de façon mobile par rapport au premier malaxeur (1),
**caractérisé en ce que** le second malaxeur (5) est réglable en hauteur par rapport au premier malaxeur (1) globalement comme unité entre deux positions extrêmes de telle sorte que d'une part le clapet de sortie (4) du premier malaxeur (1) peut occuper sa position d'ouverture respective dans une première position extrême (UE) du second malaxeur (5) et d'autre part le clapet de sortie (9) du second malaxeur (5) peut occuper sa position d'ouverture respective dans une seconde position extrême (OE) de ce malaxeur (5), et **en ce que** le second malaxeur (5) est transféré de sa première position extrême (UE) à sa seconde position extrême (OE) pendant l'opération de mélange se déroulant à l'intérieur.

2. Dispositif selon la revendication 1, **caractérisé en ce que** le second malaxeur (5) est déplaçable en hauteur de telle sorte qu'il occupe une position orientée parallèlement à lui-même au moins dans ses deux postions extrêmes (UE et OE).

3. Dispositif selon la revendication 1 ou 2, **caractérisé en ce que** le second malaxeur (5) présente un entraînement (10 à 13) qui effectue un déplacement en hauteur uniquement par translation.

4. Dispositif selon la revendication 1 ou 2, **caractérisé en ce que** le second malaxeur (5) présente un entraînement (14 à 18) sous l'effet duquel il exécute, au moins temporairement, également un mouvement transversal pendant son déplacement en hauteur.

5. Dispositif selon l'une quelconque des revendications précédentes, **caractérisé en ce que** le second malaxeur (5) présente un tuyau d'amenée pour les adjuvants, dont l'ouverture de sortie mobile par rapport au second malaxeur peut être transférée dans la zone de son orifice d'alimentation.

6. Dispositif selon au moins l'une quelconque des revendications précédentes, **caractérisé en ce qu'**au moins le second malaxeur (5) est conçu comme un malaxeur sans poinçon.

7. Dispositif selon au moins l'une quelconque des revendications précédentes, **caractérisé en ce que**, au plus tard après la fin de l'opération de mélange dans le premier malaxeur (1), le second malaxeur (5) occupe sa première position extrême (UE) dans laquelle le clapet de sortie (4) du premier malaxeur (1) est ouvert ;
**en ce que**, après la fermeture du clapet de sortie (4) du premier malaxeur (1), le second malaxeur (5) est déplacé pendant l'opération de mélange se déroulant à l'intérieur est déplacé dans sa seconde position extrême (OE) ;
**en ce que**, après la fin de l'opération de mélange dans le second malaxeur (5), son clapet de sortie (9) est ouvert avant que ce malaxeur soit transféré à nouveau dans sa première position extrême (UE) après la sortie du produit mélangé et au plus tard après la fermeture de son clapet de sortie (9).

8. Dispositif selon la revendication 7, **caractérisé en ce que** le second malaxeur (5) est transféré dans sa première position extrême (UE) parallèlement dans le temps au mouvement de fermeture de son clapet de fermeture (9).
